# EUROPÄISCHE PATENTSCHRIFT

(11) **EP 1 589 860 B1**
(45) Veröffentlichungstag und Bekanntmachung des Hinweises auf die Patenterteilung: **17.06.2009**
(21) Anmeldenummer: 04707923.1
(22) Anmeldetag: 04.02.2004
(51) Int. Cl.: A47J 37/12, A47J 36/02

(54) **VERFAHREN UND VORRICHTUNG ZUM FRITTIEREN VON LEBENSMITTELN**
METHOD AND DEVICE FOR DEEP-FRYING FOOD
PROCEDE ET DISPOSITIF DE FRITURE D'ALIMENTS

(30) Priorität: 04.02.2003 DE 10304472
(43) Veröffentlichungstag der Anmeldung: 02.11.2005
(73) Patentinhaber: 3rd Angle (U.K.) Ltd., Highley, Shropshire WV16 6NN (GB)
(72) Erfinder: CURRIE, Neil Anthony, Stourport-on-Severn, Worcestershire DY13 (GB)
(74) Vertreter: Reitstötter - Kinzebach
(86) Internationale Anmeldenummer: PCT/EP2004/001035
(87) Internationale Veröffentlichungsnummer: WO 2004/069016

(56) Entgegenhaltungen:
- WO-A-93/04617
- GB-A- 2 221 143
- US-A- 4 320 699

## Beschreibung

Die Erfindung betrifft ein Verfahren und eine Vorrichtung zum Frittieren von Lebensmitteln, wobei man Frittieröl oder Frittierfett in einem Frittiergefäß einer Fritteuse erhitzt und die Nahrungsmittel in dem heißen Frittieröl oder Frittierfett frittiert.

Derartige Fritteusen sind bekannt. Das Frittiergefäß nimmt dabei ein Frittiermedium, beispielsweise Frittierfett oder Frittieröl auf, welches durch eine Heizeinrichtung gegebenenfalls zunächst geschmolzen und anschließend auf eine Temperatur von beispielsweise 100 - 200°C, insbesondere von 150 -190°C erhitzt wird. In dem erhitzten Frittieröl können unterschiedlichste, hier als Frittiergut bezeichnete Nahrungsmittel, wie Fleisch, Fisch, Zwiebelringe, Pilze, Gemüse, Chips oder ähnliches innerhalb von wenigen Minuten frittiert werden. Der Begriff "frittieren" umfasst im vorliegenden Zusammenhang jegliche Art der Nahrungszubereitung in heißem Fett oder Öl, wie beispielsweise Braten, Backen oder Garen. Üblicherweise benutzt man zum Frittieren einen das Frittiergut aufnehmenden Korb, der beispielsweise aus einem Drahtgeflecht bestehen kann. Der Korb gewährleistet, dass das Frittiergut sicher und problemlos in das heiße Öl oder Fett eingetaucht und nach Beendigung des Frittiervorgangs wieder entnommen werden kann. Das überschüssige Fett oder Öl kann durch das Drahtgeflecht abtropfen.

Wenn im Folgenden in erster Linie von einem Frittieröl oder einem Frittierfett die Rede ist, so sollen damit nicht nur bei Raumtemperatur flüssige bzw. feste Fette bezeichnet werden, sonder auch Fette, die bei Raumtemperatur beispielsweise eine pastöse oder gelartige Konsistenz besitzen.

Zahlreiche Fritteuse weisen eine Heizeinrichtung auf, die fest mit dem Frittiergefäß verbunden ist. Die Heizeinrichtung ist häufig unter dem Boden des Frittiergefäßes angeordnet, so dass zunächst das Frittiergefäß und anschließend das in dem Frittiergefäß befindliche Fett oder Öl erhitzt wird. Es sind auch Frittiergefäße bekannt geworden, bei denen die Heizeinrichtung im Inneren des Frittiergefäßes angeordnet ist. Vorteile dieses Gerätetyps sind darin zu sehen, dass die Heizeinrichtung direkt mit dem Frittieröl oder- fett im Kontakt steht, so dass ein schnelleres Aufheizen des Frittiermediums gewährleistet ist. Die Heizeinrichtung ist typischerweise als Heizspirale ausgebildet, so dass kleinere Restpartikel des Frittiergutes an dem Heizkörper vorbei auf den Boden des Frittiergefäßes sinken können. Derartige Partikel oder Speisereste befinden sich dann nicht mehr in unmittelbarer Nähe des Heizkörpers, sondern im kühleren Bodenbereich des Frittiergefäßes. Bei anschließenden Frittierprozessen verbrennen und zersetzen sich derartige Reste in deutlich geringerem Umfang, als dies beispielsweise bei Frittiergefäßen mit Bodenheizung der Fall ist. Das Frittieröl oder -fett kann dann länger benutzt werden, weil es weniger stark durch Zersetzungsprodukte von Speiseresten belastet wird.

Früher oder später muss aber bei allen bekannten Frittiergeräten das verbrauchte Frittieröl oder Frittierfett gegen frisches Frittiermedium ausgetauscht werden.

Dabei muss der Benutzer üblicherweise warten, bis das Öl in dem Frittiergefäß weitgehend abgekühlt ist, damit Verbrennungsgefahren vermieden werden. Bei den weit verbreiteten Fritteusen ohne Ablassöffnung für das Öl muss die komplette Fritteuse angehoben und das Öl über die obere Öffnung des Frittiergefäßes in einen Auffangbehälter geschüttet werden. Dies ist nicht nur auf Grund des Gewichts und der Abmessungen einer Fritteuse sehr umständlich, sondern, insbesondere in Fällen, in denen das Frittiermedium noch nicht vollständig abgekühlt ist, auch mit erheblicher Verletzungsgefahr durch das heiße Öl verbunden.

Es sind jedoch bereits Fritteusen bekannt geworden, die eine verschließbare Öffnung zum Ablassen des Frittieröls umfassen. Derartige verschließbare Öffnungen können beispielsweise vom Benutzer über einen Kugelhahn betätigt werden. Bei unsachgemäßer Handhabung besteht aber die Gefahr, dass der Benutzer mit dem gegebenenfalls noch heißen Frittieröl in Kontakt kommt und sich erhebliche Verbrennungen zuzieht. In dem US-Patent Nr. 6,085,641 wird eine derzeit auch kommerziell erhältliche Fritteuse beschrieben, welche eine Öffnung zum Ablassen des Frittieröls umfasst, die durch einen flexible Schlauch verlängert wird. Bei bestimmungsgemäßer Benutzung der Fritteuse wird der Schlauch durch eine schwenkbare Platte an der Stirnfläche der Fritteuse abgeknickt, so dass die Öffnung verschlossen ist. Zum Ablassen des Frittieröls mit die Platte aufgeklappt, so dass der Schlauch in ein Auffanggefäß geleitet werden kann. Auch bei dieser bekannten Fritteuse besteht die Gefahr, dass Frittieröl unkontrolliert auslaufen kann, was zumindest zu unerwünschten Verschmutzungen in der Küche führt und bei versehentlichem Ablassen von heißem Frittieröl wiederum die Gefahr von Verbrennungen in sich birgt.

Das Dokument US 4 320 699 beschreibt eine Fritteuse und wird als nützlich für das Verständnis der Erfindung angesehen.

Außerdem ist bekannt, das viele Nutzer das Öl nicht sachgerecht entsorgen, sondern einfach in den Ausguss gießen, was nicht nur zu verstopften Abflussrohren führen kann, sondern auch eine unnötige Umweltbelastung darstellt.

Der vorliegenden Erfindung liegt daher das technische Problem zu Grunde, ein Verfahren und eine Vorrichtung zum Frittieren von Lebensmitteln zu geben, die ein einfaches und sicheres Entsorgen von verbrauchtem Frittieröl oder Frittierfett gewährleisten.

Gelöst wird dieses technische Problem wie in den Ansprüchen definiert.

Die Fritteuse ist einfach zu reinigen, da am Frittiergefäß selbst keine oder nur geringfügige Verschmutzungen auftreten.

Gegenstand der Erfindung ist ein Verfahren gemäss Anspruch 1, zum Frittieren von Nahrungsmitteln.

Der Einwegbehälter kann an die Form der Frittiergefäße von bereits existierenden Fritteusen angepasst werden, so dass auch herkömmlich Fritteusen im Sinne der Erfindung nachrüstbar sind. Neue Fritteusen, die speziell auf die Verwendung eines Einwegbehälters ausgelegt sind, können mit Frittiergefäßen aus kostengünstigeren Materialien ausgerüstet sein, da die Gefäße keiner abrasiven Reinigung mehr widerstehen müssen. Anstelle von Frittiergefäßen aus Edelstahl, emailliertem Stahl, oder Aluminium mit Antihaftbeschichtung können einfache, dünnwandige Stahlgefäße mit einer einfachen Schutzschicht oder unbeschichtete Aluminiumgefäße verwendet werden.

Der Einwegbehälter kann soweit dies in den Ansprüchen definiert ist, als separater Verbrauchsartikel ausgebildet sein, den man in dem Frittiergefäß anordnet und mit frischem Frittieröl, beispielsweise aus einer Flasche oder einem Kanister befüllt.

Vorzugsweise dient der Einwegbehälter aber gleichzeitig als Verpackungs- beziehungsweise Transportbehälter für das frische Frittieröl oder Frittierfett. Auf diese Weise wird der entstehende Verpackungsmüll drastisch reduziert, da die Verpackung nicht nur als Innengefäß beim Erhitzen des Öls, sondern außerdem gewissermaßen als Abfallbeutel für verbrauchtes Frittieröl oder Frittierfett dient.

Die Form des Einwegbehälters ist vorzugsweise an die innere Form des Frittiergefäßes angepasst. Formstabile Einwegbehälter können beispielsweise einfach in das Frittiergefäß eingesetzt werden. Vorteilhaft wird man aber den Einwegbehälter vor der Benutzung im Frittiergefäß fixieren. Gemäß einer bevorzugten Ausführungsform des erfindungsgemäßen Verfahrens wird dazu der Einwegbehälter am Rand des Frittiergefäßes lösbar befestigt. Dazu kann beispielsweise der obere Rand des Einwegbehälters um den Rand des Frittiergefäßes umgebogen werden. Alternativ oder zusätzlich kann der obere Rand des Einwegbehälters mit geeigneten Klemmmitteln, beispielsweise einem oder mehreren Clips oder einem umlaufenden Klemmring, am Rand des Frittiergefäßes fixiert werden.

Ein besonderer Vorteil des erfindungsgemäßen Verfahrens besteht, wie oben bereits erwähnt, darin, dass man verbrauchtes Frittieröl oder Frittierfett in dem Einwegbehälter entsorgen kann.

Wenn der Einwegbehälter als Verpackungs- und/oder Transportbehälter für das Frittieröl oder Frittierfett dient, so ist er vorzugsweise durch eine abziehbare Schutzfolie, einen aufklappbaren Deckel oder eine andere geeigneten entfernbare Abdeckung verschlossen. Vor der ersten Benutzung wird diese Abdeckung selbstverständlich entfernt. Zum Entsorgen des verbrauchten Frittieröls oder Frittierfetts ist der Einwegbehälter vorzugsweise wieder verschließbar. Hierzu können beispielsweise die Wände des Behälters zusammengefaltet oder durch eine Nut/Feder-Anordnung verschlossen werden. Alternativ kann die Öffnung des Einwegbehälters auch durch einen in den Behälterrand eingelassenen Schnurzug verschlossen werden.

Der verschließbare oder auch nichtverschließbare Einwegbehälter kann auch in einem separaten, verschließbaren Entsorgungsbeufiel entsorgt werden.

Gegenstand der Erfindung ist außerdem eine Fritteuse wie in Anspruch 6 definiert.

Vorteilhaft sind Mittel zur Befestigung des Einwegbehälters am Rand des Frittiergefäßes vorgesehen.

Besonders bevorzugt werden die Mittel zur Befestigung des Einwegbehälters durch einen umfaltbaren Rand des Einwegbehälters gebildet.

Vorteilhaft umfassen die Mittel zur Befestigung des Einwegbehälters alternativ oder zusätzlich eine Klemmeinrichtung, wie beispielsweise einen oder mehrere Halteclips oder einen Klemmring.

Bevorzugt weist die Heizeinrichtung ein in den Einwegbehälter einsetzbares Heizelement auf, das an seiner Unterseite mit einer Platte zum Ebnen der Unterseite des Einwegbehälters versehen ist, so dass sich beispielsweise ein flexibler Einwegbehälter dem Boden des Frittiergefäßes optimal anpasst. Die Platte selbst ist vorzugsweise perforiert, so dass das Frittieröl durch die Platte zirkulieren kann. Vorteilhaft dient die Platte gleichzeitig als Reflektor für die von dem Heizelement ausgestrahlte Infrarotstrahlung, so dass eine optimale Aufheizung des Frittieröls gewährleistet ist. Als Heizeinrichtung kann aber auch eine in des Frittiergefäß integrierte Vorgesehen sein. In diesem Fall wird man vorteilhaft für einen guten thermischen Kontakt zwischen dem Frittiergefäß und dem Einwegbehälter sorgen. Alternativ können Einwegbehälter aus geeigneten Metallen oder Einwegbehälter, die Einsätze aus geeigneten Metallen aufweisen, über eine Induktionsheizung erhitzt werden.

Ein Einwegbehälter für Frittieröl oder Frittierfett, ist in dem erfindungsgemäßen Verfahren oder in der erfindungsgemäßen Fritteuse verwendbar, wobei der Einwegbehälter aus einem hitzebeständigen Material, beispielsweise einem hitzebeständigen Kunststoff, wie etwa Polyester, einer dünnen Metallfolie, beispielsweise einer Aluminiumfolie, oder einer Mehrschichtstruktur aus Kunststoff- und Metallschichten besteht. Das Behältermaterial sollte dabei mindestens Temperaturen von 250 °C und mehr standhalten. Die bevorzugte Stärke bzw. Dicke der Metallfolie beträgt dabei 0,01 mm bis 0,5 mm, besonders bevorzugt 0,05 mm bis 0,3 mm, und ganz besonders bevorzugt etwa 0,1 mm.

Besonders vorteilhaft ist der Körper des Einwegbehälters als nahtloses einstückiges Bauteil ausgebildet, so dass die Gefahr des Auftretens von Lecks verringert wird. Ein solcher Behälter kann beispielsweise durch Tiefziehen hergestellt werden. Gemäß einer vorteilhaften Ausführungsform kann der Behälter auch aus einem einzigen flächigen Zuschnittteil gefaltet und durch Kleb- oder Schweißstellen fixiert werden.

Gegenstand der Erfindung ist auch die Verwendung eines Sets, wie in Anspruch 10 definiert.

Die Erfindung wird im Folgenden unter Bezugnahme auf in den beigefügten Zeichnungen dargestellte Ausführungsbeispiele näher erläutert, In den Figuren werden Elemente von verschiedenen Ausführungsformen, welche dieselben oder entsprechende Funktionen erfüllen, mit denselben Bezugsziffern bezeichnet.

In den Zeichnungen zeigen:
- Figur 1: eine Fritteuse mit einer ersten Variante des Einwegbehälters für Frittieröl oder Frittierfett;
- Figur 2: eine erste Variante der Befestigung des Einwegbehälters in der Fritteuse;
- Figur 3: den aus der Fritteuse herausgenommenen Einwegbeutel der Variante der Figur 2;
- Figur 4: eine zweite Variante der Befestigung des Einwegbehälters in der Fritteuse;
- Figur 5: den aus der Fritteuse herausgenommenen Einwegbeutel der Variante der Figur 4;
- Figur 6: eine dritte Variante der Befestigung des Einwegbehälters in der Fritteuse im Querschnitt;
- Figur 7: einen zusätzlichen Enfisorgungsbeutel für den Einwegbehälter;
- Figur 8: eine Variante des Entsorgungsbeutels der Fig. 7;
- Figur 9: ein Querschnitt einer Fritteuse mit Einwegbehälter und darin eingetauchtem Heizelement;
- Figur 10: ein Detailausschnitt der Querschnittsdarstellung der Figur 9;
- Figur 11: einen weiteren Querschnitt einer Fritteuse mit einer Variante des Einwegbehälters;
- Figur 12: eine Variante der Verwendung des Einwegbehälters;
- Figur 13: einen dem Querschnitt der Figur 9 entsprechenden Querschnitt einer Fritteuse mit Bodenheizung;
- Figur 14: eine Verkaufsform des Einwegbehälters mit Ölbehälter und Entsorgungsbeutel;
- Figur 15: ein Zuschnittteil zur Herstellung eines gefalteten Einwegbehälters;
- Figur 16: einen ersten Zwischenschritt beim Falten des Zuschnittteils der Figur 15;
- Figur 17: einen zweiten Zwischenschritt;
- Figur 18: den aus dem Zuschnittteil der Figur 15 gefalteter Einwegbehälter; und
- Figur 19: der zusammengeklappte Einwegbehälter der Figur 18.

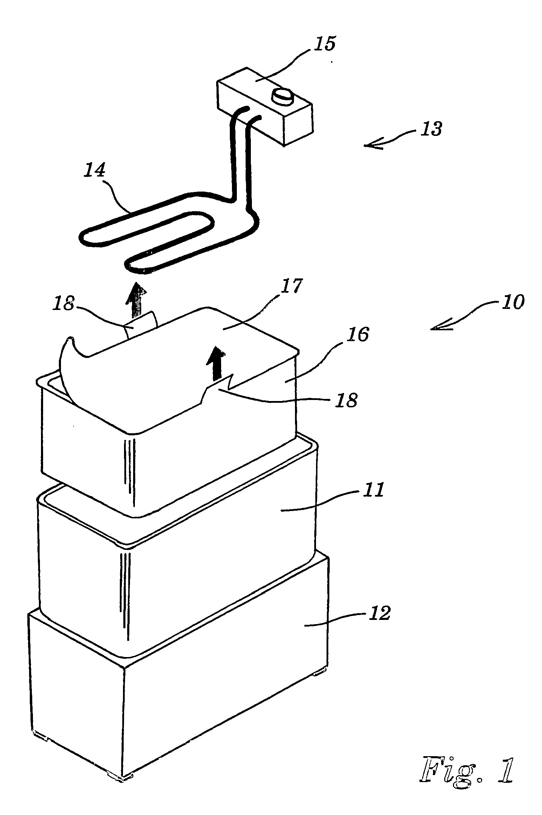

In Figur 1 ist eine Fritteuse 10 in einer Explosionsdarstellung wiedergegeben. Die Fritteuse 10 besteht aus einem Frittiergefäß 11, das von einem Gehäusemantel 12 umgeben ist. In das Frittiergefäß 11 wird herkömmlicherweise Frittieröl oder Frittierfett gefüllt, das über eine in das Frittiergefäß 11 eintauchende Heizeinrichtung 13 erhitzt wird. Die Heizeinrichtung 13 weist ein Heizelement 14, sowie ein Steuergerät 15 zur Regelung der Heizleistung auf. Der isolierende Gehäusemantel 12 verhindert, dass der Benutzer direkt mit dem heißen Frittiergefäß in Kontakt kommt. Erfindungsgemäß wird das Frittieröl oder Frittierfett nicht direkt in das Frittiergefäß 11 gefüllt, sondern es wird in einem gleichzeitig als Verpackung dienenden Einwegbehälter 16 in das Frittiergefäß 11 eingesetzt. Das frische Frittieröl oder Frittierfett ist vor der ersten Benutzung durch eine abziehbare Schutzfolie 17 vor Verschmutzung geschützt. Die Schutzfolie muss, wie in Figur 1 bereits angedeutet, abgezogen werden, bevor die Heizeinrichtung 13 eingesetzt werden kann. Zum leichteren Einsetzen und Herausnehmen des Einwegbehälters 16 aus dem Frittiergefäß 11 weist der Behälter 16 seitliche Laschen oder Griffe 18 auf, die - bei eingesetztem Einwegbehälter - über den oberen Rand des Frittiergefäßes hinausragen. Nach dem Abziehen der Schutzfolie 17 und dem Einsetzen der Heizeinrichtung 13 ist die Fritteuse betriebsbereit und das Öl oder Fett kann erhitzt werden. Die zu frittierenden Nahrungsmittel werden nach Erhitzen des Öl, wie bei herkömmlichen Fritteusen auch, in einem (hier nicht dargestellten) Frittierkorb in das Öl hinabgelassen. Der wesentliche Unterschied zu herkömmlichen Fritteusen besteht darin, dass sich bei der erfindungsgemäßen Fritteuse, das heiße Öl immer noch in dem Einwegbehälter 16 befindet. Wenn das Öl nach mehrmaliger Benutzung verbraucht ist, also insbesondere einen zunehmenden Anteil von Zersetzungsprodukten von Nahrungsmittelresten enthält, wird der Einwegbehälter 16 aus dem Frittiergefäß 11 herausgenommen und das Öl kann in dem Einwegbehälter 16 entsorgt werden.

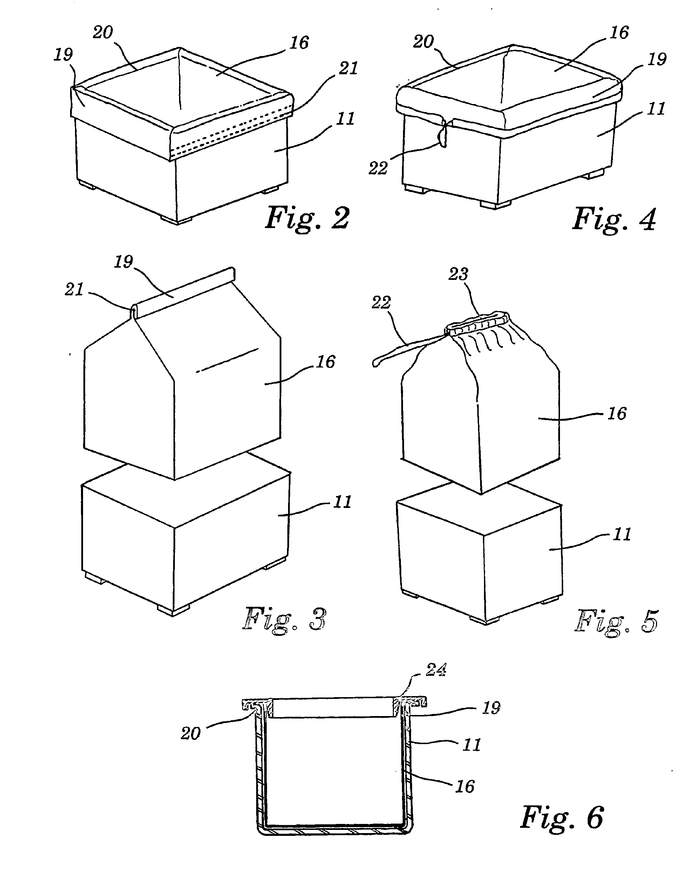

In Figur 2 ist eine Variante des Einwegbehälters 16 der Figur 1 dargestellt, welcher, der besseren Zuordnung wegen, wiederum mit der Bezugsziffer 16 bezeichnet ist. Der Einwegbehälter 16 ist in das Frittiergefäß 11 eingesetzt, wobei es für die vorliegende Erfindung keine Rolle spielt, ob das Frittiergefäß, wie in Figur 1, von einem weiteren Gehäuse (Bezugsziffer 12 in Figur 1) umgeben ist, oder, wie in den Darstellungen der Figuren 2 ff., lediglich als einzelnes Frittiergefäß 11 ausgebildet ist. Zur Befestigung des Einwegbehälters 16 in dem Frittiergefäß 11 wird der obere Rand 19 des Einwegbehälters 16 über den Rand 20 des Frittiergefäßes gebogen. In den oberen Rand 19 sind dünne Metallstreifen 21 eingelassen, die es erlauben, den Einwegbehälter 16 durch Umfalten des oberen Randes 19 zu verschließen, wenn das verbrauchte Öl oder Fett, wie in Figur 3 dargestellt, entsorgt werden soll.

Die Figuren 4 und 5 zeigen eine den Figuren 2 und 3 entsprechende Variante des Einwegbehälters 16, bei der in den oberen Rand 19 des Behälters 16 eine Zugschnur 22 eingelassen ist, die es ermöglicht, die Öffnung 23 des Behälters 16 zu verschließen.

In Figur 6 ist eine Variante der Befestigung des Einwegbehälters 16 in dem Frittiergefäß 11 dargestellt, bei welcher der obere Rand 19 des Einwegbehälters mit Hilfe eines Klemmrings 24 am oberen Rand 20 des Frittiergefäßes 16 befestigt ist. Alternativ können auch ein oder mehrere Halteclips am Umfang des Frittiergefäßes 11 verteilt sein.

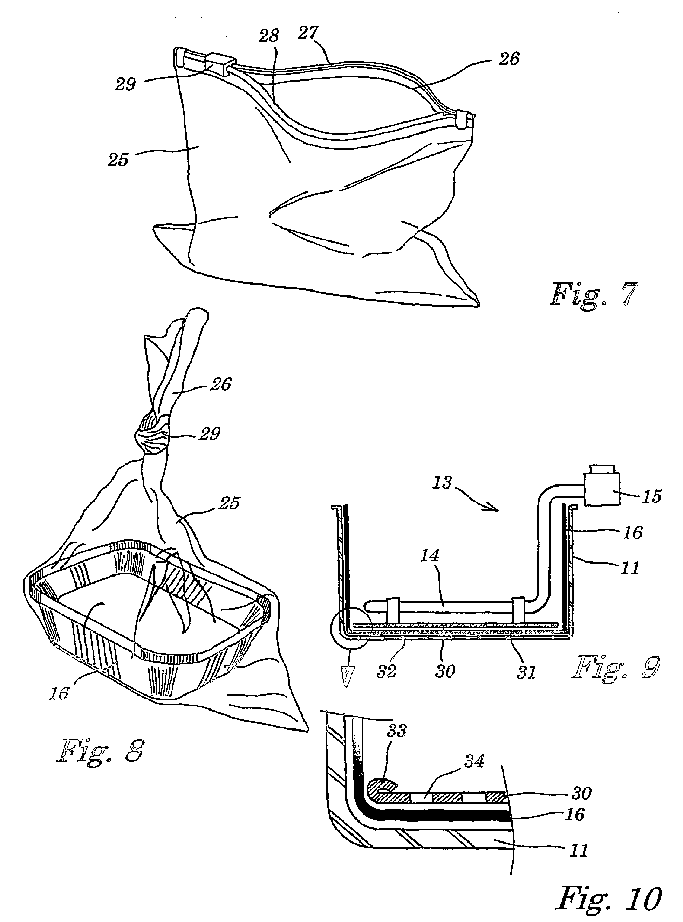

Gemäß einer bevorzugten Variante der Erfindung wird der Einwegbehälter 16 in einem separaten Entsorgungsbeutel entsorgt, wie er in Figur 7 exemplarisch dargestellt ist. Die Verwendung eines separaten Entsorgungsbeutels 25, in welchen der Einwegbehälter 16 eingesetzt werden kann, ist insbesondere dann bevorzugt, wenn der Einwegbehälter 16 nicht wieder verschließbar ist. Der Entsorgungsbehälter 25 kann durch jegliches geeignete Mittel verschlossen werden, beispielsweise durch eine am oberen Rand 26 des Beutels vorgesehene Nut und Feder-Anordnung 27, 28, die durch einen beweglichen Schieber 29 zusammengeführt und damit verschlossen werden. Derartige Verschlusssysteme sind beispielsweise bei Gefrierbeuteln weit verbreitet. Ein derartiges Verschlusssystem kann selbstverständlich auch alternativ zu den in den Figuren 2 - 5 beschriebenen Varianten zum Verschließen des Einwegbehälters 16 selbst vorgesehen sein.

Figur 8 zeigt eine besonders einfache Variante des Entsorgungsbeutels 25, der so lang ist, dass nach Einbringen des mit verbrauchtem Frittieröl gefüllten Einwegbehälters 16 der obere Rand 26 durch einen einfachen Knoten 29 verschlossen werden kann.

Der Einwegbehälter 16 ist vorzugsweise der Form des Frittiergefäßes 11 weitgehend angepasst. Wenn der Einwegbehälter 16 allerdings aus relativ flexiblem Material besteht, beispielsweise einer dünnen Aluminiumfolie, kann es bei Verwendung in einem Frittiergefäß mit Eintauchheizelement vorteilhaft sein, wenn, wie in Figur 9 dargestellt, unter dem Heizelement 14 der Heizeinrichtung 13 eine perforierte Platte 30 angeordnet ist, welche dafür sorgt, dass die Unterseite 31 des Einwegbehälters 16 möglichst eben am Boden 32 des Frittiergefäßes anliegt. Der Einwegbehälter wird bei dieser Variante nicht am Rand des Frittiergefäßes gehalten, sondern vom dessen Boden 32 getragen.

Wie in der Detaildarstellung der Figur 10 gezeigt, sind die Ränder 33 der Platte 30 vorzugsweise abgerundet, so dass die dünne Wand des Einwegbehälters 16 nicht beschädigt wird. Die Öffnungen 34 der perforierten Platte 30 ermöglichen eine Zirkulation des erhitzten Fettes und erleichtern das Einsetzen des Heizelementes in das Frittieröl. Ferner dient die Platte 30 als Reflektor für die von dem Heizelement 14 ausgehende Wärmestrahlung, so dass eine effektivere Aufheizung des Öl erreicht werden kann.

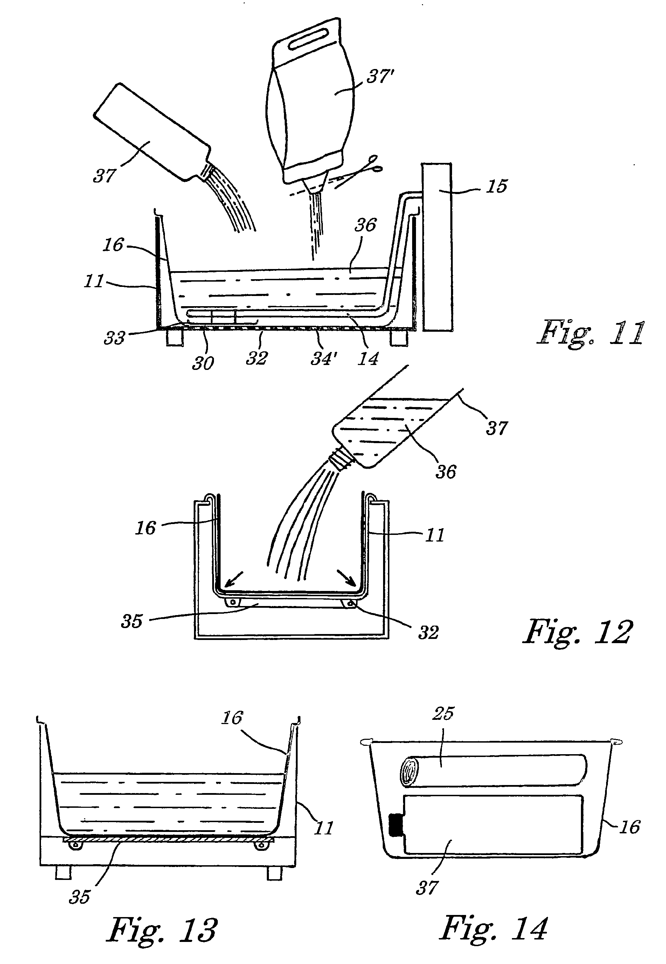

Figur 11 zeigt eine Variante der Ausführungsform der Figuren 9 und 10. Bei dieser Variante weist der Boden 32 des Frittiergefäßes 11 Lüftungsöffnungen 34' auf, so dass kühle Umgebungsluft durch Konvektion einströmen und am Außenrand des Einwegbehälters 16 aufsteigen kann. Dadurch kann im Betrieb der Fritteuse, der Boden auf dem das Frittiergefäß 11 steht kühl gehalten werden. Außerdem verringert eine effektive Kühlluftkonvektion die Abkühlzeit des Öls in dem Einwegbehälter 16, so dass die Gefahr von Verbrennungen beim Herausnehmen des Einwegbehälters 16 verringert wird. Auch bei der Variante der Figur 11 wird das Einweggefäß 16 nicht am Rand des Frittiergefäßes 11 eingehängt, sondern liegt aus Stabilitätsgründen auf dessen Boden 32 auf. Bei dieser Variante ist die Andrückplatte 30 kürzer als bei der Ausführungsform der Figur 9 ausgebildet und, wie aus der Zeichnung ersichtlich, lediglich unter vorderen Teil des Heizelementes 14 angeordnet. Die Platte 33 weist aber wiederum einen abgerundeten Rand 33 auf, um eine Perforation der dünnen Metallfolie des Einwegbehälters 16 zu vermeiden. Das Frittieröl 36 kann, beispielsweise in bei Raumtemperatur flüssiger oder fester Form oder als Gel, in einem verschlossenen Einwegbehälter 16 verkauft werden, oder, wie durch die Frittierölbehälter 37,37' angedeutet, vom Benutzer aus Flaschen 37 oder Beuteln 37' vor der ersten Benutzung in den Einwegbehälter 16 gefüllt werden.

Der erfindungsgemäße Einwegbehälter 16 kann sowohl in Fritteusen mit in das Frittiergefäß eintauchender Heizeinrichtung, als auch bei Fritteusen verwendet werden, bei denen das Heizelement 35 in den Boden 32 des Frittiergefäßes 11 integriert ist. Dies ist in den Figuren 12 und 13 schematisch dargestellt, wobei bei der in Figur 12 gezeigten Variante das Einweggefäß 16 nicht als Verpackungsbehälter dient, sondern frisches Frittieröl 36 aus einer separaten Flasche 37 in den Einwegbehälter 16 gegossen wird, so dass dieser später lediglich zum Entsorgen das Frittieröls benötigt wird. Wie in Figur 12 gezeigt, kann der Einwegbehälter 16 so flexibel sein, dass der hydrostatische Druck des Frittieröls allein genügt, einen guten thermischen Kontakt zwischen der Wand des Einwegbehälters 16 und dem Heizelement 35 des Frittiergefäßes 11 zu gewährleisten. Bei der Variante der Figur 13 ist der Einwegbehälters ausreichend steif und mit einem flachen, gegebenenfalls zusätzlich versteiften Boden versehen, so dass auch hier ein guter thermischer Kontakt zwischen dem Heizelement 35 und dem Einwegbehälter 16 gewährleistet ist. Selbstverständlich kann zwischen dem Boden des Einwegbehälters 16 und dem Heizelement 35 zusätzlich ein Wärmekoppler, wie beispielsweise eine Wärmeleitpaste, vorgesehen sein.

Figur 14 zeigt eine typische Verkaufsform der Erfindung, bei der ein erfindungsgemäßer Einwegbehälter 16 zusammen mit einer Flasche 37 mit frischem Frittieröl und einem Entsorgungsbeutel 25 angeboten wird.

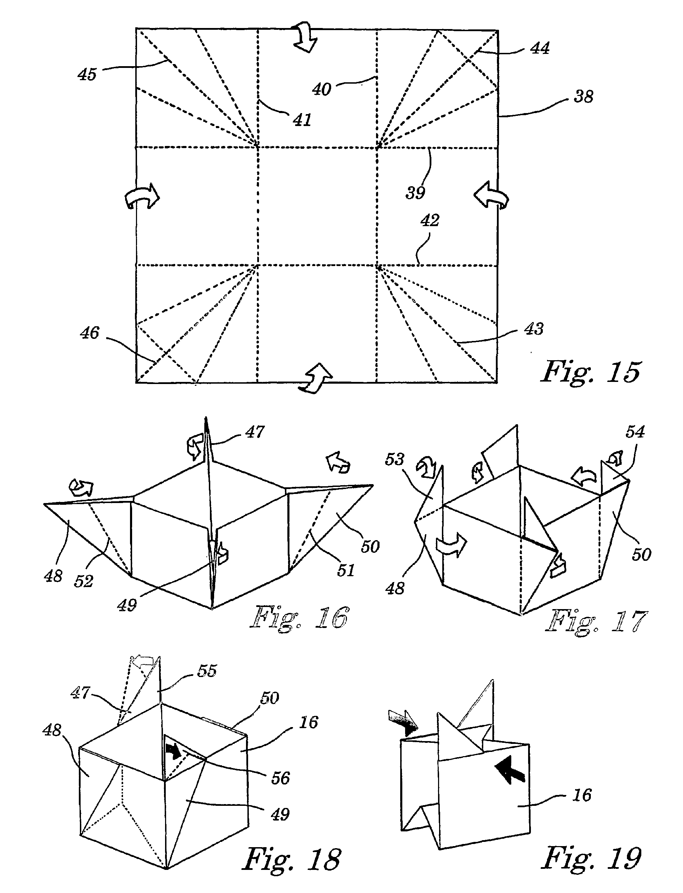

In den Figuren 15 - 19 ist ein faltbarer Einwegbehälter 16 dargestellt, der nahtlos aus einem Zuschnittteil 38 gefaltet wird, so dass ein weitgehend leckagesicherer Behälter realisiert werden kann. Dazu wird das Zuschnittteil 38 zunächst, wie in Figur 15 dargestellt, entlang der parallel zu den Längskanten des Zuschnittteils 38 verlaufenden Linien 39, 40, 41, 42 senkrecht nach oben gefaltet, während die Ecken des Zuschnittteils entlang der Linien 43, 44, 45 und 46 zusammengefaltet werden, so dass man den in Figur 16 dargestellten Quader mit nach außen abstehenden Ecken 47, 48, 49 und 50 erhält. Die Ecken werden jeweils entlang der Linien 51, 52 hälftig zurückgefaltet, so dass man den in Figur 17 dargestellten Körper erhält. Die Spitzen zweier gegenüberliegenden Ecken 48, 50 werden nach unten umgefaltet und an den Flächen 53, 54 verklebt. Anschließend werden alle vier Ecken umgefaltet und mit dem Außenkörper des Quaders verklebt, so dass der in Figur 18 dargestellte Behälter 16 resultiert, bei dem zwei Spitzen 55, 56 der Ecken 47 bzw. 49 nach oben vorspringen und als Griffe dienen können. Figur 19 zeigt schließlich den Behälter 16 in einem zusammengefalteten Zustand, in welchem er beispielsweise als Zubehör für Fritteusen verkauft werden kann.

## Patentansprüche

1. Verfahren zum Frittieren von Nahrungsmitteln,
wobei man Frittieröl oder Frittierfett in einem Frittiergefäß (11) einer Fritteuse (10) erhitzt und die Nahrungsmittel in dem heißen Frittieröl oder Frittierfett frittiert, indem man das Frittieröl oder Frittierfett in einem aus dem Frittiergefäß (11) herausnehmbaren Einwegbehälter (16) erhitzt und
und man verbrauchtes Frittieröl oder Frittierfett in dem Einwegbehälter (16) entsorgt, indem man den Einwegbehälter (16) mit dem Frittieröl oder Frittierfett aus der Fritteuse herausnimmt und in einem verschließbaren Entsorgungsbeutel (25) entsorgt.

2. Verfahren gemäß Anspruch 1, **dadurch gekennzeichnet, dass** man frisches Frittieröl oder Frittierfett vor dem Erhitzen in den Einwegbehälter (16) füllt.

3. Verfahren gemäß Anspruch 2, **dadurch gekennzeichnet, dass** frisches Frittieröl oder Frittierfett in dem als Transportbehälter dienenden Einwegbehälter (16) konditioniert ist und man den Einwegbehälter (16) vor dem Erhitzen in dem Frittiergefäß (11) anordnet.

4. Verfahren gemäß einem der Ansprüche 1 bis 3, **dadurch gekennzeichnet, dass** man den Einwegbehälter (16) am Rand (20) des Frittiergefäßes (11) lösbar befestigt.

5. Verfahren gemäß einem der Ansprüche 1 bis 4, **dadurch gekennzeichnet, dass** der Einwegbehälter (16) wiederverschließbar ist.

6. Fritteuse mit wenigstens einem zur Aufnahme von Frittieröl oder Frittierfett vorgesehenen Frittiergefäß (11) und einer Heizeinrichtung (13) zum Erhitzen des Frittieröls, wobei das Frittieröl oder Frittierfett in einem herausnehmbaren Einwegbehälter (16) in dem Frittiergefäß (11) angeordnet ist,
**dadurch gekennzeichnet,**
**dass** die Heizeinrichtung (13) ein in den Einwegbehälter (16) einsetzbares Heizelement (14) umfasst, das an seiner Unterseite mit einer Platte (30) zum Ebnen der Unterseite (31) des Einwegbehälters (16) versehen ist.

7. Fritteuse gemäß Anspruch 6, **dadurch gekennzeichnet, dass** Mittel (20,21,22,24) zur Befestigung des Einwegbehälters (16) am Rand (20) des Frittiergefäßes vorgesehen sind.

8. Fritteuse gemäß Anspruch 7, **dadurch gekennzeichnet, dass** die Mittel zur Befestigung des Einwegbehälters (16) durch einen umfaltbaren Rand (20,21) des Einwegbehälters (16) gebildet werden.

9. Fritteuse gemäß einem der Ansprüche 7 oder 8, **dadurch gekennzeichnet, dass** die Mittel zur Befestigung des Einwegbehälters (16) eine Klemmeinrichtung (24) umfassen.

10. Verwendung eines Sets, bestehend aus einem Einwegbehälter (16) aus einem hitzebeständigen Material, einem Behälter (37,37') mit Frittieröl und einem Entsorgungsbeutel (25), zur Durchführung des Verfahrens nach einem der Ansprüche 1 - 5.

11. Verwendung gemäß Anspruch 10, **dadurch gekennzeichnet, dass** der Körper der Einwegbehälters (16) als ein nahtloses, einstückiges Bauteil ausgebildet ist.

12. Verwendung gemäß Anspruch 11, **dadurch gekennzeichnet, dass** der Einwegbehälter (16) aus einem einzigen Zuschnittteil (38) nahtlos gefaltet ist.

13. Verwendung gemäß einem der Ansprüche 11 oder 12, **dadurch gekennzeichnet, dass** der Einwegbehälter aus einer Aluminiumfolie geformt ist.

14. Verwendung gemäß Anspruch 13, **dadurch gekennzeichnet, dass** die Aluminiumfolie eine Stärke von 0,01 mm bis 0,5 mm, vorzugsweise 0,05 mm bis 0,3 mm aufweist.

## Claims

1. A method for deep-frying food,
wherein deep-frying oil or deep-frying fat is heated in a deep-frying vessel (11) of a deep fat fryer (10) and the food is deep-fried in the hot deep-frying oil or deep-frying fat by heating the deep-frying oil or deep-frying fat in a one-way container (16) which can be taken out of the deep-frying vessel (11) and
the used-up deep-frying oil or deep-frying fat in the one-way container (16) is disposed of by removing the one-way container (16) together with the deep-frying oil or deep-frying fat from the deep fat fryer and disposing it of in a closable disposal bag (25).

2. The method in accordance with claim 1, **characterized in that** fresh deep-frying oil or deep-frying fat is introduced into the one-way container (16) prior to heating.

3. The method in accordance with claim 2, **characterized in that** fresh deep-frying oil or deep-frying fat is conditioned in the one-way container (16) used as the transport container, and that the one-way container (16) is arranged in the deep-frying vessel (11) prior to heating.

4. The method in accordance with one of claims 1 to 3, **characterized in that** the one-way container (16) is releasably fastened on the rim (20) of the deep-frying vessel (11).

5. The method in accordance with one of claims 1 to 4, **characterized in that** the one-way container (16) can be reclosed.

6. A deep fat fryer, having at least one deep-frying vessel (11) intended for receiving deep-frying oil or deep-frying fat and a heating device (13) for heating the deep-frying oil, wherein the deep-frying oil or the deep-frying fat is arranged in a removable one-way container (16) in the deep-frying vessel (11),
**characterized in that**
the heating device (13) includes a heating element (14), which can be introduced into the one-way container (16), and that on its underside, a plate (30) for leveling the underside (31) of the one-way container (16) is provided.

7. The deep fat fryer in accordance with claim 6, **characterized in that** means (20, 21, 22, 23) for fastening the one-way container (16) on the rim (20) of the deep-frying vessel are provided.

8. The deep fat fryer in accordance with claim 7, **characterized in that** the means for fastening the one-way container (16) are constituted by a rim (20, 21) of the one-way container (16), which can be folded over.

9. The deep fat fryer in accordance with one of claims 7 or 8, **characterized in that** the means for fastening the one-way container (16) comprise a clamping device (24).

10. The use of a set consisting of a one-way container (16) made of a heat-resistant material, of a container (37, 37') of deep-frying oil, and of a disposal bag (25), for use in the method in accordance with one of claims 1 to 5.

11. The use in accordance with claim 10, **characterized in that** the body of the one-way container (16) is designed as a seamless one-piece element.

12. The use in accordance with claim 11, **characterized in that** the one-way container (16) has been seamlessly folded from a single cut-to-size element (38).

13. The use in accordance with one of claims 11 or 12, **characterized in that** the one-way container has been formed from an aluminum foil.

14. The use in accordance with claim 13, **characterized in that** the aluminum foil has a thickness of 0.01 mm to 0.5 mm, preferably of 0.05 mm to 0.3 mm.

## Revendications

1. Procédé pour frire des aliments,
dans lequel on chauffe une huile ou une graisse de friture dans un bac à frire (11) d'une friteuse (10) et on fait frire les aliments dans l'huile ou la graisse de friture bouillante en chauffant l'huile ou la graisse de friture dans un récipient à usage unique (16) pouvant être retiré du bac à frire (11) et
on élimine l'huile ou la graisse de friture utilisée du récipient à usage unique (16) en retirant le récipient à usage unique (16) avec l'huile ou la graisse de friture de la friteuse et on l'évacue dans une pochette à déchets (25).

2. Procédé selon la revendication 1, **caractérisé en ce que** l'on remplit le récipient à usage unique (16) avec de l'huile ou de la graisse de friture fraîche.

3. Procédé selon la revendication 2, **caractérisé en ce que** l'huile ou la graisse de friture fraîche est conditionnée dans le récipient à usage unique (16) servant de récipient de transport et que l'on dispose le récipient à usage unique (16) dans le bac à frire (11) avant le chauffage.

4. Procédé selon l'une des revendications 1 à 3, **caractérisé en ce que** l'on fixe de manière amovible le récipient à usage unique (16) sur le bord (20) du bac à frire (11).

5. Procédé selon l'une des revendications 1 à 4, **caractérisé en ce que** le récipient à usage unique (16) peut être refermé.

6. Friteuse avec au moins un bac à frire (11) prévu pour recevoir de l'huile ou de la graisse de friture et un dispositif de chauffage (13) pour chauffer l'huile de friture, l'huile ou de la graisse de friture étant disposée dans le bac à frire (11) à l'intérieur d'un récipient à usage unique (16) amovible
**caractérisé en ce que**
le dispositif de chauffage (13) comprend un élément de chauffage (14) pouvant être introduit dans le récipient à usage unique (16), pourvu à sa partie inférieure d'une plaque (30) pour niveler la partie inférieure (31) du récipient à usage unique (16).

7. Friteuse selon la revendication 6, **caractérisé en ce que** des moyens (20, 21, 22, 24) sont prévus sur le bord (20) du bac à frire pour fixer le récipient à usage unique (16).

8. Friteuse selon la revendication 7, **caractérisé en ce que** les moyens pour fixer le récipient à usage unique (16) sont formés par un bord repliable (20, 21) du récipient à usage unique (16).

9. Friteuse selon la revendication 7 ou 8, **caractérisé en ce que** les moyens pour fixer le récipient à usage unique (16) comprennent un dispositif de blocage.

10. Utilisation d'un ensemble formé par un récipient à usage unique (16) en un matériau réfractaire, un récipient (37, 37') contenant de l'huile de friture et une pochette à déchets (25) pour exécuter le procédé selon l'une des revendications 1 à 5.

11. Utilisation selon la revendication 10, **caractérisé en ce que** le corps du récipient à usage unique (16) est conçu comme un constituant monobloc sans couture.

12. Utilisation selon la revendication 11, **caractérisé en ce que** le récipient à usage unique (16) est plié à partir d'une seule pièce découpée (38) sans couture.

13. Utilisation selon la revendication 11 ou 12, **caractérisé en ce que** le récipient à usage unique est formé par une feuille d'aluminium.

14. Utilisation selon la revendication 13, **caractérisé en ce que** la feuille d'aluminium a une épaisseur de 0,01 à 0,5 mm, de préférence de 0,05 à 0,3 mm.
